(19) Europäisches Patentamt
European Patent Office
Office européen des brevets

(11) **EP 1 295 431 B1**

(12) **EUROPEAN PATENT SPECIFICATION**

(45) Date of publication and mention
of the grant of the patent:
**17.12.2008 Bulletin 2008/51**

(51) Int Cl.:
***H04L 9/32*** (2006.01)

(21) Application number: **01940511.7**

(22) Date of filing: **21.05.2001**

(86) International application number:
**PCT/EP2001/005795**

(87) International publication number:
**WO 2001/097444 (20.12.2001 Gazette 2001/51)**

(54) **CRYPTOGRAPHIC COMPARISON OF SELECTIONS FROM SMALL RANGES**

KRYPTOGRAFISCHER VERGLEICH VON INNERHALB EINES KLEINEN ZAHLENINTERVALLS AUSGEWÄHLTEN WERTEN

COMPARAISON CRYPTOGRAPHIQUE DE SELECTIONS DE PETITES PLAGES DE VALEURS

(84) Designated Contracting States:
**AT BE CH CY DE DK ES FI FR GB GR IE IT LI LU MC NL PT SE TR**

(30) Priority: **16.06.2000 EP 00202091**

(43) Date of publication of application:
**26.03.2003 Bulletin 2003/13**

(73) Proprietor: **Nederlandse Organisatie voor toegepast-natuurwetenschappelijk Onderzoek TNO**
**2628 VK Delft (NL)**

(72) Inventor: **GELBORD, Boaz, Simon**
**NL-1018 VV Amsterdam (NL)**

(74) Representative: **Prins, Adrianus Willem et al**
**Vereenigde**
**P.O.Box 87930**
**2508 DH Den Haag (NL)**

(56) References cited:
**US-A- 5 615 269**

• **BRASSARD G ET AL: "MINIMUM DISCLOSURE PROOFS OF KNOWLEDGE" JOURNAL OF COMPUTER AND SYSTEM SCIENCES,GB, ACADEMIC PRESS, INC., LONDON, vol. 37, 1988, pages 156-189, XP000575720 ISSN: 0022-0000**
• **BELLARE M; MICALI S: "Non-Interactive Oblivious Transfer and Applications" ADVANCES IN CRYPTOLOGY - CRYPTO'89, 1990, pages 547-557, XP000929209 Berlin, West Germany, Springer Verlag ISBN: 3-540-97317-6**
• **BOYAR J ET AL: "SHORT DISCREET PROOFS" ADVANCES IN CRYPTOLOGY - EUROCRYPT. INTERNATIONAL CONFERENCE ON THE THEORY AND APPLICATION OF CRYPTOGRAPHIC TECHNIQUES,DE,BERLIN, SPRINGER, 12 May 1996 (1996-05-12), pages 131-142, XP000725439 ISBN: 3-540-61186-X**
• **CREPEAU C ET AL: "COMMITTED OBLIVIOUS TRANSFER AND PRIVATE MULTI-PARTY COMPUTATION" PROCEEDINGS OF THE ANNUAL INTERNATIONAL CRYPTOLOGY CONFERENCE (CRYPTO),DE,BERLIN, SPRINGER, vol. CONF. 15, 27 August 1995 (1995-08-27), pages 110-123, XP000533636 ISBN: 3-540-60221-6**

## Description

The invention relates to a method for comparing selections from small ranges.

In computer communication, and especially using the Internet, the situation frequently arises that two parties want to compare messages, without revealing the content of the message. For example, in a situation of negotiation between a buyer and a seller on the Internet, both buyer and seller would like to make an offer for a price and compare whether both their prices match. In the case the offers do not match, neither party should be able to find out what the offer of the other party was.

For situations where the possible range of selections, for example the price range, is relatively large the known method of hashing can be used to achieve this goal. This hashing method is not suitable however for situations where the possible range of selections is limited. In this case a trusted third party could be used to solve the problem, but this makes the procedure complex and in many cases practically impossible.

US-A-5 615 269 describes an electronic blind negotiation system between two parties with assistance of trusted third parties.

The goal of the invention is to provide a method that solves these disadvantages, by means of which two parties can compare selections from a small range without revealing the content of their messages, without the necessity of using a trusted third party.

This goal is achieved by a method according to claim 1.

Briefly, the sending party commits itself to a value from a range agreed with the receiver. The sender compiles a commitment message with control numbers for each value in the range; the control numbers are selected such that the receiver is able to deduce from the control numbers that the sender has committed to one of the values, without knowing which value. If the verification leads to the conclusion that the sender did not commit to any value, the receiver terminates the procedure.

In a next step the receiving party can ask the sender a question by way of oblivious transfer; the question is whether the sender is committed to a certain value of the range. The sender replies by way of oblivious transfer, which implies that the sender does not know the question asked. The receiver is now able to deduce from the sender's reply the answer to his question, i.e. whether the committed values match or not, and verify whether this answer complies with the previous received commitment value.

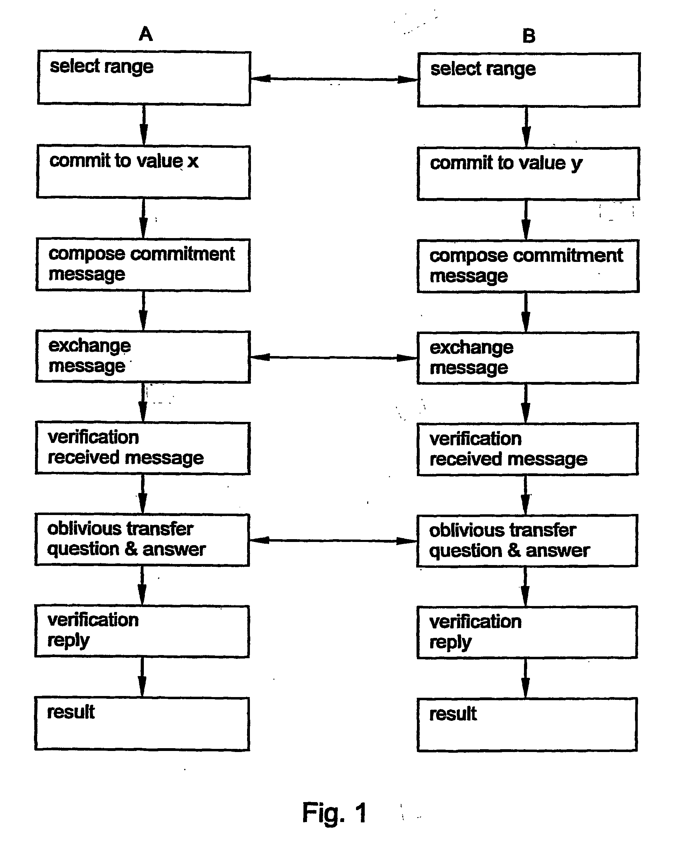

Particularly advantageous elaborations of the invention are set forth in the dependent claims. Further objects, elaborations, modifications, effects and details of the invention appear from the following description, in which reference is made to the drawing, in which Fig. 1 shows a flow diagram of an implementation of the invention.

In an embodiment of the invention a first party A wants to sell a certain object to a second party B; party B is willing to buy the object. The sale will take place if a price offered by buyer B is acceptable for seller A. A and B agree on a range within which they want to compare offers, for example 10 to 100 monetary units, divided in ten intervals. Both A and B will commit themselves to one of the intervals, the one interval that corresponds with their offer. This step, as well as the steps mentioned hereinafter correspond to the flow diagram of fig. 1. In fig. 1 the steps performed by party A are shown on the left hand side, and those performed by party B are shown on the right hand side. Whenever information is exchanged between party A and B this is shown by an double headed arrow linking the respective flow chart items of party A and B.

A and B agree on a range of intervals indicated by unique numbers between 1 and t, wherein t is an integer. Party A commits himself to an interval of the range indicated by x whereas party B commits himself to an interval of the range indicated by y.

A generates two random primes p, q of bit size c; p and q are chosen such that -1 is a non-quadratic residue modulo p and q. Both p and q are kept secret by A. Subsequently a parameter n is determined as:

$$n = pq$$

By choosing a large bit size c the security of the method can be increased; a large bit size c means however that more calculation time is needed to perform the method.

A further generates a range of control numbers $a_1$- $a_t$ by selecting for each $a_i$ ($1 <= i <= t$) a random value k, that fulfils both the conditions:

- $1 < k < n$, and
- k is a quadratic residue modulo n.

A master control number a is defined to be one of the four square roots modulo n of the number:

$$\prod_{i=1}^{t} a_i \bmod n$$

Party A composes a commitment message comprising the numbers:

$$\{n, a, a_1, \ldots, -a_x, \ldots, a_t\}.$$

In the commitment message party A has indicated the value x to which party A has committed himself by taking the additive inverse value of $a_x$. Party A does

not disclose in the commitment message for which index i this additive inverse value has been applied.

Party B performs the steps to compose a commitment message in similar fashion, with control numbers $b_i$, and a predetermined number m. Note that the control numbers $b_i$, and the predetermined number m are different from the numbers used by party A.

Subsequently party A sends its commitment message to party B. Party B receives the commitment message from A and verifies whether the commitment message includes at least one committed value. In this example the verification of the commitment message comprises determining whether the square of the master control number a equals the product of each of the control numbers $a_i$. The corresponding formula of this condition is:

$$a^2 \equiv \prod_{i=1}^{t} a_i \bmod n$$

If the commitment message meets this requirement, then it is certain that party A has committed himself to at least one value, although party B does not know to which value. If the verification requirement is not met, party A has committed himself to an even number of values and therefore necessarily not to a single value. Party B can subsequently cancel the protocol as party A has cheated by not committing to a single value.

Party B transmits in similar fashion a commitment message to A with the value party B is committed to, and accordingly party A verifies the commitment of party B.

If both the verifications of party A and B are validated, it is established between parties that they each have committed to a value of the range, without knowing to which value. In the next phase of the procedure according to the invention party A and B will compare whether they have committed to the same value or not; in case the values do not match neither party will know to which value the other party had committed itself

If party B has established that party A has committed to at least one value, party B can proceed to the next step in the protocol. In this step, party B asks party A one single question regarding to which value party A has committed, to which question party A will answer without knowing the question. In this embodiment of the invention the known method of oblivious transfer is used to achieve this. As question B will put whether the committed value of A is equal to the committed value of B.

The invention is not limited to a single question as shown in this example; the invention can be implemented for posing more than one question.

Oblivious transfer is a well known technique in encryption protocols, so a detailed description of the implementation is left out.

For the oblivious transfer party A determines a range of oblivious transfer control strings $u_i$ in the form of strings defined as:

$$u_i = a_i' \| 0..0$$

The values for $a_i'$ are defined as:

$$\left(a_i'\right)^2 \equiv a_i \bmod n$$

The length of each string $u_i$ is 2tc; all values for $u_i$ are $a_i'$ with padded zero's except for $u_x$ which is defined as:

$$u_x = a_1' \| a_2' \| . \| a_t'$$

Party B accordingly prepares a range of oblivious transfer control including numbers $v_i$.

Using a known method of oblivious transfer, party A asks a single question to party B, to which party B responds by obliviously transferring exactly one of the strings $v_i$. Party A asks for the transfer of the string that corresponds with the value that party A has committed to.

Party B asks in similar fashion for exactly one of the strings $u_i$.

As is the case with oblivious transfer, the party replying to a question does not know to which question is answered, in this case, it is not known which of the strings $u_i$ respectively $v_i$ is being transferred.

The index of the string received is respectively a' and b'. After both parties receive the respective string u and v, they carry out a verification of that string. Consequently, two situations can occur: first, the received string u is padded with zero's. In this case, party A verifies that in the previously transferred control numbers $b_i$ has received a square root (mod m) in the position $b_{a'}$. If this is the case, the answer to the question posed by A is negative, that is to say the value asked by A is not the value that B has committed to. If the verification fails, party B has cheated, and party A terminates the protocol.

In the case that $V_{a'}$ is not padded with zero's, party A verifies that in the previously received control numbers, he has received the square roots (mod m) of all the $b_i$. If this is validated, the value for y is known to party A, and the answer to the question posed by A is affirmative, that is to say the value asked by A is equal to the value that B has committed to. If the verification fails, party B has cheated, and party A terminates the protocol. In similar fashion party B will verify the reply by party A.

In this way party A and B have been able to compare their respective commitments efficiently without the need of a trusted third party and without the risk of unnecessarily disclosing their commitments.

If information is intercepted during the exchange of information between A and B, e.g. in case of a non secure connection such as the Internet, the third party will not gain knowledge of the secret values x or y. Also the messages exchanged between A and B will not leak information, as they are encrypted using a recognised hard mathematical problem, provided that the parameter length corresponding with the problem, c in this example, is long enough.

The number of computations that have to be performed as well as the memory requirement are polynomial in the size of the parameter t in this example.

The invention is not limited to the protection of the commitment message used in the above described embodiment by means of the quadratic residue problem. This protection can also be achieved according to the invention by way of other well known difficult mathematical problems such as factoring large numbers and computing discrete logarithms.

In the previous example the invention is implemented for comparing values from a range, the invention is however not limited to this application. The invention can also be applied with other selections from small ranges. For example parties can agree over a range consisting of values representing information such as age, interests, education etc. Using such ranges, parties can compare mutual corresponding properties, without disclosing the properties. This can be for example in finding like minded persons within a web-based community, whereby the searching parties do not disclose their interest to others. An other example of an application for the invention is for matching job opportunities to interested persons, for which the range of values corresponds to job particulars such as experience, education, salary etc.. In this case both the party offering the job and the party looking for a job do not want to disclose their intentions to others, except to parties with matching particulars.

The invention can be implemented for example in a protocol suitable to be executed on a computer or on a computer network. The invention can for example also be implemented on a computer system of an Internet service provider to which parties have, preferably secure, access. The invention can also be implemented on an Internet server that provides an e-commerce environment to which parties have secure access.

The invention can be implemented in software, suitable for running on a client computer of each one of the parties involved. The software program product includes program portions for executing the respective steps of the method according to the invention. In particular the program product according to the invention can be implemented as software suitable to be downloaded over a network, like the Internet, e.g. in the form of Java applets.

**Claims**

1. Method for cryptographic comparison of selections of two respective parties from a predetermined range of values without revealing the content of their messages and without the necessity of using a trusted third party, comprising the steps of
selecting a range of values,
selecting at least one committed value (x, y) of said range by each party,
composing a commitment message by each party, including control numbers corresponding respectively with each one value of said range,
sending by each party of its commitment message to the other party, and
verification by each party of its respective received commitment message including checking of the presence of at least one committed value.

2. Method as claimed in claim 1, further comprising the steps of
posing by the receiving party to the sending party of at least one question with respect to the committed value by way of oblivious transfer, and
verification by the receiving party of the reply obliviously transferred by the sending party, including comparison of the oblivious transferred reply with the corresponding commitment message.

3. Method as claimed in claim 1 or 2, wherein the control numbers comprise for each value of said range a quadratic residue modulo a predetermined number n, wherein said predetermined number n is the multiplication of at least two prime numbers (p, q).

4. Method as claimed in claim 3, wherein the control number associated with said at least one committed number comprises the additive inverse of a quadratic residue modulo of said predetermined number n.

5. Method as claimed in claim 3 or 4, wherein said commitment message includes at least said predetermined number n.

6. Method as claimed in any one of claim 3-5, wherein said commitment message includes at least a master control number (a) formed by at least taking a square root of the product of each control number, modulo n.

7. Method as claimed in claim 6, wherein the verification of the commitment message comprises determining whether the square of the master control number (a) equals the product of each of the control numbers ($a_i$) of said range, modulo n.

8. Method as claimed in any one of the preceding claims, wherein the sender determines a range of oblivious transfer control strings ($u_i$) for each of said values of said range, each oblivious transfer control strings ($u_i$) comprising the square root of the respective control number ($a_i$) modulo said predetermined number n.

9. Method as claimed in claim 8, wherein the oblivious transfer control string ($u_x$) for the at least one committed value comprises the square root of each control number ($a_i$) modulo said predetermined number n.

10. Method as claimed in claim 9, wherein said question includes the transfer of at least one of said oblivious transfer control strings.

11. Method as claimed in any of the preceding claims, wherein the commitment message includes at least two committed values.

12. Method as claimed in any of the preceding claims, wherein at least two questions are posed.

13. Computer program product, directly loadable into the internal memory of a computer, comprising software portions for performing the steps of any one of the claims 1-12, when said product is run on a computer.

## Patentansprüche

1. Verfahren zum kryptographischen Vergleich von Auswahlen von zwei Parteien aus einem vorgegebenen Wertebereich ohne Offenlegung des Inhalts ihrer Nachrichten und ohne Notwendigkeit, eine dritte Vertrauenspartei zu verwenden, mit den Schritten Auswählen eines Wertebereichs, Auswählen wenigstens eines zugesagten Wertes (x, y) aus dem Bereich durch jede Partei, Zusammensetzen einer Zusagenachricht durch jede Partei, einschließlich Kontrollzahlen entsprechend jedem Wert aus dem Bereich, Übertragen der Zusagenachricht durch jede Partei zu der anderen Partei, und Verifizieren der empfangenen Zusagenachricht durch jede Partei einschließlich der Überprüfung des Vorhandenseins wenigstens eines zugesagten Wertes.

2. Verfahren nach Anspruch 1, bei dem weiter von jeder empfangenden Partei der sendenden Partei wenigstens eine Frage mit Bezug auf den zugesagten Wert mittels unbemerkter Übertragung (oblivious transmission) gestellt wird, und von der empfangenden Partei die von der sendenden Partei unbemerkt übertragende Antwort verifiziert wird, was den Vergleich der unbemerkt übertragenden Antwort mit der entsprechenden Zusagenachricht umfasst.

3. Verfahren nach Anspruch 1 oder 2, wobei die Kontrollzahlen für jeden Wert aus dem Bereich ein quadratisches Residuum modulo einer vorgegebenen Zahl n umfasst, wobei die vorgegebene Zahl das Produkt von wenigstens zwei Primzahlen (p, q) ist.

4. Verfahren nach Anspruch 3, wobei die dem wenigstens einen zugesagten Wert zugeordnete Kontrollzahl das additive Inverse eines quadratischen Residuums modulo der vorgegebenen Zahl n umfasst.

5. Verfahren nach Anspruch 3 oder 4, wobei die Zusagenachricht wenigstens die vorgegebene Zahl n beinhaltet.

6. Verfahren nach einem der Ansprüche 3 bis 5, wobei die Zusagenachricht wenigstens eine übergeordnete Kontrollzahl (a) beinhaltet, die wenigstens durch Bildung der Quadratwurzel des Produkts jeder Steuerzahl modulo n gebildet ist.

7. Verfahren nach Anspruch 6, wobei die Verifizierung der Zusagenachricht die Feststellung beinhaltet, ob das Quadrat der übergeordneten Kontrollzahl (a) gleich dem Produkt aller Kontrollzahlen ($a_i$) des Bereichs modulo n ist.

8. Verfahren nach einem der vorhergehenden Ansprüche, wobei der Sender einen Bereich von Steuerketten der unbemerkten Übertragung ($u_i$) für jeden der Werte aus dem Bereich bestimmt, wobei jede Steuerkette der unbemerkten Übertragung ($u_i$) die Quadratwurzel der jeweiligen Steuerzahl ($a_i$) modulo der vorgegebenen Zahl n enthält.

9. Verfahren nach Anspruch 8, wobei die Steuerkette der unbemerkten Übertragung ($u_i$) für den wenigstens einen zugesagten Wert die Quadratwurzel jeder Steuerzahl ($a_i$) modulo der vorgegebenen Zahl beinhaltet.

10. Verfahren nach Anspruch 9, wobei die Frage die Übertragung von wenigstens einer der Steuerketten der unbemerkten Übertragung umfasst.

11. Verfahren nach einem der vorhergehenden Ansprüche, wobei die Zusagenachricht wenigstens zwei zugesagte Werte enthält.

12. Verfahren nach einem der vorhergehenden Ansprüche, wobei wenigstens zwei Fragen gestellt werden

13. Computer-Programmprodukt, das direkt in den internen Speicher eines Computers ladbar ist und das Software-Komponenten zur Durchführung der Schritte nach einem der Ansprüche 1 bis 12 aufweist, wenn das Produkt auf einem Computer abläuft.

**Revendications**

1. Procédé de comparaison cryptographique de sélections effectuées par deux correspondants respectifs dans une plage de valeurs prédéterminée sans révéler le contenu de leurs messages et sans qu'il soit nécessaire de faire appel à un tiers de confiance, comprenant les étapes suivantes :

   sélection d'une plage de valeurs,
   sélection par chaque correspondant d'au moins une valeur sûre (x, y) de ladite plage,
   composition par chaque correspondant d'un message de sécurité comportant des nombres de contrôle correspondant respectivement à chacune des valeurs de ladite plage,
   envoi par chaque correspondant de son message de sécurité à l'autre correspondant, et
   vérification par chaque correspondant du message de sécurité respectif reçu par lui, comprenant le contrôle de la présence d'au moins une valeur sûre.

2. Procédé selon la revendication 1, comprenant en plus les étapes suivantes :

   pose par le correspondant destinataire au correspondant expéditeur d'au moins une question à propos de la valeur sûre par le biais d'un transfert équivoque, et
   vérification par le correspondant destinataire de la réponse transmise par transfert équivoque par le correspondant expéditeur, comprenant la comparaison de la réponse transmise par transfert équivoque avec le message de sécurité correspondant.

3. Procédé selon la revendication 1 ou la revendication 2, dans lequel les nombres de contrôle comprennent pour chaque valeur de ladite plage un résidu quadratique modulo un nombre prédéterminé $n$, lequel nombre prédéterminé $n$ est le produit de la multiplication d'au moins deux nombres premiers ($p$, $q$).

4. Procédé selon la revendication 3, dans lequel le nombre de contrôle associé au(x) nombre(s) de sécurité comprend l'inverse additif d'un résidu quadratique modulo dudit nombre prédéterminé $n$.

5. Procédé selon la revendication 3 ou la revendication 4, dans lequel ledit message de sécurité comporte au moins ledit nombre prédéterminé $n$.

6. Procédé selon l'une quelconque des revendications 3 à 5, dans lequel ledit message de sécurité comporte au moins un nombre de contrôle maître a formé au moins en prenant une racine carrée du produit de chaque nombre de contrôle, modulo $n$.

7. Procédé selon la revendication 6, dans lequel la vérification du message de sécurité comprend le fait de déterminer si le carré du nombre de contrôle maître $a$ est égal au produit de chacun des nombres de contrôle $a_i$ de ladite plage, modulo $n$.

8. Procédé selon l'une quelconque des revendications précédentes, dans lequel l'expéditeur détermine une plage de chaînes de contrôle de transfert équivoque $u_i$ pour chacune desdites valeurs de ladite plage, chaque chaîne de contrôle de transfert équivoque $u_i$ comprenant la racine carrée du nombre de contrôle respectif $a_i$ modulo ledit nombre prédéterminé $n$.

9. Procédé selon la revendication 8, dans lequel la chaîne de contrôle de transfert équivoque $u_i$ pour la ou lesdites valeur(s) sûre(s) comprend la racine carrée de chaque nombre de contrôle $a_i$ modulo ledit nombre prédéterminé $n$.

10. Procédé selon la revendication 9, dans lequel ladite question comprend le transfert de l'une au moins desdites chaînes de contrôle de transfert équivoque.

11. Procédé selon l'une quelconque des revendications précédentes, dans lequel le message de sécurité comprend au moins deux valeurs sûres.

12. Procédé selon l'une quelconque des revendications précédentes, dans lequel au moins deux questions sont posées.

13. Produit logiciel informatique pouvant être chargé directement dans la mémoire interne d'un ordinateur et comprenant des parties de logiciel qui permettent d'exécuter les étapes selon l'une quelconque des revendications 1 à 12 lorsque ledit produit tourne sur un ordinateur.

A

B

| select range | | select range |

commit to value x

commit to value y

compose commitment message

compose commitment message

exchange message

exchange message

verification received message

verification received message

oblivious transfer question & answer

oblivious transfer question & answer

verification reply

verification reply

result

result

## Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5615269 A